# EUROPÄISCHE PATENTSCHRIFT

(11) **EP 3 285 035 B1**
(45) Veröffentlichungstag und Bekanntmachung des Hinweises auf die Patenterteilung: **10.03.2021**
(21) Anmeldenummer: 17186753.4
(22) Anmeldetag: 17.08.2017
(51) Int. Cl.: F27B 17/00, B29C 35/04, B29C 51/42

(54) **TEMPERIEROFEN**
TEMPERING OVEN
FOUR À RECUIT

(30) Priorität: 18.08.2016 DE 102016115374
(43) Veröffentlichungstag der Anmeldung: 21.02.2018
(73) Patentinhaber: Airtec Thermoprocess GmbH, 46414 Rhede (DE); Läpple Automotive GmbH, 93158 Teublitz (DE)
(72) Erfinder: Lauth, Oliver, 48734 Reken (DE); Frericks, Andreas, 46414 Rhede (DE); Alda, Rudolf, 46395 Bocholt (DE); Rauschdorf, Ludwig, 74906 Bad Rappenau (DE); Koch, Timo, 74078 Heilbronn (DE); Heckmann, Martin, 74078 Heilbronn (DE)
(74) Vertreter: Habbel, Ludwig

(56) Entgegenhaltungen:
- EP-A2- 0 345 932
- EP-A2- 1 674 229
- DE-U1-202011 107 449

## Beschreibung

Die Erfindung betrifft einen Temperierofen nach dem Oberbegriff des Anspruchs 1.

Als Temperierofen wird im Rahmen des vorliegenden Vorschlags ein Ofen bezeichnet, der im Unterschied zu Schmelzöfen nicht dazu dienen soll, Material aufzuschmelzen und der im Unterschied zu Anwendungen in der Lebensmittelindustrie nicht dazu dienen soll, Lebensmittel zu garen. Vielmehr dient ein Temperierofen im Sinne des vorliegenden Vorschlags dazu, Werkstücke auf eine bestimmte Temperatur zu bringen bzw. auf einer bestimmten Temperatur zu halten.

Aus der EP 0 345 932 A1, die den am nächsten kommenden Stand der Technik darstellt, ist ein Temperierofen bekannt, der für die Produktion von Leichtbauplatten - so genannten "Honeycomb"-Platten - verwendet wird. Diese Platten enthalten Waben aus Leichtmetall oder Papier sowie zwei dünne Deckplatten aus Leichtmetall oder Kunststoff. Die Temperierung der Werkstücke erfolgt mit Hilfe von Heißluft, welche in die Ofenkammer eingeleitet wird. Im Unterschied zu einer Konduktionsbeheizung werden hierdurch Schwierigkeiten vermieden, eine vollflächige Kontaktierung des Werkstücks sicherstellen zu müssen. Im Unterschied zu beispielsweise einer Strahlungsbeheizung werden die Schwierigkeiten vermieden, das Werkstück zu überhitzen oder bei stark reflektierenden Werkstücken einen sehr geringen Wirkungsgrad in Kauf nehmen zu müssen oder bei einer dreidimensionalen Werkstückoberfläche aufgrund von Abschattungen unterschiedliche Temperaturverteilungen zu erzielen. Im Unterschied zu beispielsweise einer Induktionserwärmung lassen sich somit auch elektrisch nicht leitende Werkstücke temperieren.

Die Werkstücke können in anderen Anwendungsfällen, und auch vorschlagsgemäß, bevorzugt Platinen sein, also flache Werkstücke, beispielsweise Halbzeuge, wobei die Werkstücke aus metallischen Werkstoffen bestehen. Es kann sich beispielsweise um Aluminium-, Magnesium-, Titan- oder Stahllegierungen handeln. Die Aufheizung der Platinen auf ein gegenüber der Raumtemperatur höheres Temperaturniveau kann beispielsweise dazu dienen, die Werkstücke leichter verformen zu können oder beim Formänderungsvorgang Schäden an den Werkstücken, beispielsweise in Form von Rissen, zu vermeiden. In Werkstücken und Halbzeugen können vor oder nach der Formgebung spezifische Wärmebehandlungszustände eingestellt werden, ggf. in einer Abfolge von Erwärmung, Halten und Abkühlen / Abschrecken.

Der Erfindung liegt die Aufgabe zugrunde, einen gattungsgemäßen Temperierofen dahingehend zu verbessern, dass dieser kurze Taktzeiten bei der Temperierung der Werkstücke ermöglicht, wirtschaftlich betrieben werden kann und eine homogene Temperaturverteilung des Werkstücks ermöglicht sowie eine hohe Präzision in der Temperaturführung des Ofens.

Diese Aufgabe wird durch einen Temperierofen mit den Merkmalen des Anspruchs 1 gelöst. Vorteilhafte Ausgestaltungen sind in den Unteransprüchen beschrieben.

Die Erfindung schlägt mit anderen Worten vor, die Verschlussblende, mit welcher die Beschickungsöffnung der Ofenkammer wahlweise verschlossen oder geöffnet werden kann, nicht als schwenkbewegliche Klappe auszugestalten, sondern vielmehr als Teil eines Schubfachs, welches ähnlich einem Möbel-Schubfach in der Ofenkammer angeordnet ist, so dass in dieser Stellung die Verschlussblende die Beschickungsöffnung abschließt. Wird das Schubfach aus der Ofenkammer herausgezogen, kann dabei die Verschlussblende starr und unbeweglich an dem Schubfach verbleiben. Dadurch, dass die Verschlussblende gemeinsam mit dem Schubfach bewegt wird, wird automatisch bei der Bewegung des Schubfachs die Beschickungsöffnung freigegeben, wenn die Verschlussblende zunehmend weiter von der Beschickungsöffnung entfernt wird. Dadurch, dass die Verschlussblende nicht beweglich gelagert sein muss, wird die Ofenkonstruktion robuster, so dass Wartungs- und Instandhaltungskosten des Ofens möglichst niedrig gehalten werden können. Zudem wird ein möglichst dichter Sitz der Verschlussblende sichergestellt, wenn sich die Verschlussblende in ihrer Schließstellung befindet, so dass Wärmeverluste aus der Ofenkammer verringert oder sogar vermieden werden, was die Wirtschaftlichkeit des Temperierofens weiter verbessert. Über diese Wirtschaftlichkeitsaspekte hinaus wird auch die Temperaturführung des Ofens und die gleichmäßige Temperaturverteilung in der Ofenkammer durch den dichten Abschluss der Verschlussblende verbessert. Die Verschlussblende ist vorzugsweise thermisch isoliert, um Wärmeverluste der Ofenkammer zu verringern.

Als zweite Maßnahme ist vorschlagsgemäß vorgesehen, dass zur Bewegung des Schubfachs ein Manipulator verwendet wird. Bei bekannten Temperieröfen wird der Manipulator dazu genutzt, die temperierten Werkstücke aus der Ofenkammer zu entnehmen bzw. die Ofenkammer mit neuen Werkstücken zu beschicken. Im Unterschied dazu wird vorschlagsgemäß der Manipulator dazu genutzt, das Schubfach zu öffnen. Hierzu kann das Schubfach außerhalb des Warmbereichs des Ofens erfasst werden, so dass der Manipulator nicht den hohen Temperaturen ausgesetzt werden muss, die im Warmbereich des Ofens, beispielsweise innerhalb der Ofenkammer, herrschen. Auch hierdurch werden Wartungs- und Instandhaltungskosten des Temperaturofens positiv beeinflusst.

Vorschlagsgemäß ist weiterhin vorgesehen, dass die Werkstücke von oben und von unten mit Heißgas beaufschlagt werden, indem sowohl oberhalb als auch unterhalb des Werkstücks, nämlich oberhalb sowie unterhalb von dem Träger Heißlufteinlässe in die Ofenkammer münden. Dabei ist vorschlagsgemäß vorgesehen, dass die Luft, die aus den Heißlufteinlässen austritt, auf den Träger gerichtet ist - beispielsweise überwiegend senkrecht, also rechtwinklig, zu dessen Oberfläche, also beispielsweise auf die Platine, die auf dem Träger liegt, so dass die Platine von beiden Seiten mit Heißluft beaufschlagt wird. Hierdurch ergibt sich einerseits die Möglichkeit, die Werkstücke sehr schnell aufzuheizen, weil eine Prallströmung als so genannte Prallluft auf die Werkstückoberfläche auftrifft und verwirbelt. Eine längsgerichtete Anströmung entlang der Oberfläche der Werkstücke mit einer dementsprechend schlechten Wärmeübertragung auf das Werkstück wird auf diese Weise vermieden. Durch die entstehenden Verwirbelungen wird eine möglichst gleichmäßige Temperaturverteilung über die gesamte Fläche des Werkstücks unterstützt.

Schließlich ist vorschlagsgemäß vorgesehen, dass die Heißluft mit einer hohen Anströmgeschwindigkeit auf das Werkstück auftrifft, so dass einerseits die erwähnten Verwirbelungen geschaffen werden und andererseits auch durch die hohe Anströmgeschwindigkeit eine intensive Wärmeübertragung auf das Werkstück sichergestellt werden kann. Zu diesem Zweck ist vorschlagsgemäß vorgesehen, dass die Anströmgeschwindigkeit wenigstens 7 m/s beträgt und eine Umwälzgeschwindigkeit der Heißluft zur Erzielung eines Umwälz-Volumenstroms von wenigstens 30.000 m³/h erzielt wird. Das Heizgebläse wird folglich auf eine solche Umwälzgeschwindigkeit konstruktiv ausgelegt, und in Verbindung mit der Ausgestaltung der Heißlufteinlässe kann die gewünschte Anströmgeschwindigkeit durch die entsprechende Ausgestaltung des Heizgebläses sichergestellt werden.

Durch den hohen Heißluftstrom werden gleichmäßige Temperaturverhältnisse in der Ofenkammer und insbesondere im Werkstück begünstigt. Auch wird hierdurch eine sehr präzise Einhaltung einer Solltemperatur ermöglicht. Im Temperierofen verteilte Temperatursensoren, die mit einer elektronischen Ofensteuerung zusammenwirken können dazu beitragen, dass die Beheizung der Heißluft feinfühlig und bedarfsgerecht geregelt wird, so dass ein bestimmtes Temperaturniveau präzise eingehalten werden kann. Diese Beheizung kann elektrisch oder mit fossilen Brennstoffen wie Öl oder Gas erfolgen.

Vorteilhaft können Temperaturverluste bei geöffnetem Schubfach dadurch vermieden werden, dass das Schubfach eine zweite Verschlussblende aufweist. Diese zweite Verschlussblende ist im Abstand von der erstgenannten Verschlussblende angeordnet, so dass sie die Beschickungsöffnung der Ofenkammer verschließt, wenn das Schubfach geöffnet ist. Mittels dieser zweiten Verschlussblende werden Wärmeverluste bei geöffnetem Schubfach verringert, so dass der Temperierofen wirtschaftlich betrieben werden kann und zudem auch eine möglichst gleichmäßige Temperaturverteilung in der Ofenkammer beibehalten werden kann, da Auskühlungen nahe der Beschickungsöffnung verringert oder vermieden werden können. Zudem wird durch die zweite Verschlussblende auch die Wärmeeinwirkung auf Elemente verringert, die sich außerhalb des Ofens befinden, beispielsweise auf einen Manipulator, der zur Entnahme der Werkstücke von dem Träger oder zur erneuten Beschickung des Trägers dient.

Vorteilhaft kann die Anströmgeschwindigkeit, mit welcher die Heißluft auf das Werkstück auftrifft, wenigstens 10 m/s betragen, indem das Heizgebläse, und ggf. auch die Heißlufteinlässe, dementsprechend konstruktiv ausgelegt sind oder, sofern einstellbar, dementsprechend eingestellt werden.

Zudem kann vorteilhaft das Heizgebläse so ausgestaltet sein, dass es eine Umwälzgeschwindigkeit von wenigstens 50.000 m³/h fördert.

Der gewünschte hohe Heißluftstrom kann durch Radial- oder Axialventilatoren erzeugt werden, wobei ggf. mehrere derartige Ventilatoren zu Erzielung der gewünschten Umwälzgeschwindigkeit in Reihe oder parallel geschaltet werden können. Vorteilhaft jedoch kann das Heizgebläse als Querstromventilator ausgestaltet sein. Hierdurch wird eine kompakte Ausgestaltung des Temperierofens unterstützt, so dass die Einsatzmöglichkeiten des Temperierofens insofern vergrößert werden, als ein entsprechend kompakt ausgestalteter Temperierofen auch dort aufgestellt werden kann, wo die Platzverhältnisse beengt sind. Somit kann ein Zielkonflikt gelöst werden, der bei herkömmlichen Temperieröfen häufig darin besteht, dass ein Ofen hoher Leistung häufig mit einem sehr großen Platzbedarf einhergeht. Insbesondere wenn vorhandene Prozesslinien um eine Temperierstation ergänzt werden sollen, ergibt sich dann das Problem, dass entweder kein ausreichender Platz zur Verfügung steht, um einen leistungsfähigen Temperierofen in die Prozesslinie einzubinden, oder dass ein ausreichend kleiner, in die Prozesslinie integrierbarer Temperierofen die Produktivität der Prozesslinie verringert, beispielsweise was die Anzahl der pro Zeiteinheit in der Prozesslinie fertiggestellten Produkte angeht.

Vorteilhaft kann das Heizgebläse als Niederdruckventilator ausgestaltet sein, mit einem Überdruck von höchstens 1.200 Pa zusätzlich zum herrschenden Atmosphärendruck, so dass das Heizgebläse mit einem hohen Wirkungsgrad betrieben werden kann, bezogen auf die zu seinem Betrieb eingesetzte Energie, so dass hierdurch wiederum die Wirtschaftlichkeit beim Betrieb des gesamten Temperierofens vorteilhaft beeinflusst wird. Insbesondere kann die konstruktive Auslegung des Heizgebläses als Niederdruckventilator derart ausgestaltet sein, dass dieser mit einem Überdruck von höchstens 900 Pa arbeitet. Im Zusammenhang mit vergleichsweise großen Austrittsöffnungen an den Heißlufteinlässen wird erreicht, dass das Heizgebläse keine hohe Pressung aufweisen, also keinen hohen Überdruck erzeugen muss.

Vorteilhaft kann die Luftführung in der Ofenkammer so erfolgen, dass das Werkstück sicher auf dem Träger aufliegt. Zu diesem Zweck kann vorgesehen sein, dass die Werkstücke von oben stärker angeströmt werden als von unten, so dass ohne zusätzliche Halterungen, die das Werkstück ggf. auch gegenüber der Temperatureinwirkung abschatten würden, eine sichere Auflage des Werkstücks auf dem Träger bewirkt wird, und die Beschickung des Trägers sowie später die Entnahme des temperierten Werkstücks vom Träger besonders schnell und unkompliziert erfolgen kann und nicht durch eventuelle Halterungen behindert wird, die ansonsten vorgesehen sein könnten, um das Werkstück am Träger festzulegen.

Ein zuverlässiger Verschluss der Beschickungsöffnung durch die Verschlussblende kann vorteilhaft mittels eines zusätzlichen Verriegelungselements sichergestellt werden. Zu Gunsten der Robustheit der Ofenkonstruktion kann auch in diesem Fall vorgesehen sein, das Verriegelungselement außerhalb der Ofenkammer anzuordnen. Das Verriegelungselement ist beweglich zwischen einer Riegelstellung und einer Freigabestellung. Wenn sich die Verschlussblende in ihrer Schließstellung befindet, kann das Riegelelement in seine Riegelstellung geführt werden, in welcher es die Verschlussblende in ihrer Schließstellung hält. Abweichend davon kann das Verriegelungselement in eine Freigabestellung bewegt werden, in welcher es die Verschlussblende freigibt, so dass nun das Schubfach geöffnet und später wieder geschlossen werden kann. Erst dann, wenn die Verschlussblende wieder in ihrer Schließstellung angeordnet ist, wird auch das Riegelelement wieder in seine Riegelstellung bewegt.

Zu Gunsten einer einfachen, wirtschaftlichen und robusten Ausgestaltung kann das Verriegelungselement in einer ersten Ausgestaltung vorteilhaft als pneumatischer Riegel ausgestaltet sein, der längsbeweglich ist und die Verschlussblende über eine Schrägfläche in ihrer Riegelstellung hält. Die Schrägfläche kann am Verriegelungselement angeordnet sein oder an der Verschlussblende, oder diese beiden genannten Bauteile können jeweils eine Schrägfläche aufweisen. Jedenfalls ergibt sich mit fortschreitender Bewegung des Verriegelungselements aufgrund der Schrägfläche ein zunehmender Anpressdruck, mit welchem die Verschlussblende die Beschickungsöffnung verschließt, und bei umgekehrter Bewegungsrichtung des Verriegelungselementes ein dementsprechend nachlassender Anpressdruck. In einer zweiten Ausgestaltung kann ein Kniehebelmechanismus vorgesehen sein, auf welchen ein Pneumatikzylinder einwirkt, so dass hohe Schließkräfte erzeugt werden können.

Bei entsprechenden räumlichen Voraussetzungen kann der Temperierofen mehrere Etagen aufweisen, in dem zwei oder mehr Ofenkammern mit jeweils eigenem Schubfach übereinander angeordnet sind. Eine elektronische Ofensteuerung kann für diese mehreren Ofenkammern gemeinsam vorgesehen sein, um auf diese Weise eine möglichst wirtschaftliche Ausgestaltung des gesamten, mehreren Etagen umfassenden Temperierofens zu bewirken.

Bei einer mehretagigen Ausgestaltung des Temperierofens kann vorteilhaft jeder Ofenkammer ein eigenes Heizgebläse zugeordnet sein. Abgesehen von dem Platzbedarf in der Höhe werden dadurch möglichst kompakte Abmessungen des gesamten Temperierofens unterstützt, während ein größeres Heizgebläse, welches diese mehreren Ofenkammern mit Heißluft beschicken würde, auch eine vergrößerte Grundfläche aufweisen würde und somit den Platzbedarf zum Aufstellen des Temperierofens vergrößern würde.

Zudem lassen die mehreren Heizgebläse einen besonders flexiblen Betrieb des Temperierofens zu, indem während Zeiten, in denen nicht sämtliche Ofenkammern zum Temperieren von Werkstücken genutzt werden, die entsprechenden Heizgebläse der nicht benötigten Ofenkammern abgeschaltet werden können. Ebenso wie die gemeinsame Ofensteuerung für sämtliche Etagen möglich ist, kann vorteilhaft auch ein gemeinsamer Manipulator den mehreren Schubfächern zugeordnet sein. Dieser Manipulator ist höhenbeweglich, beispielsweise mittels eines Scherenhubtisches, so dass er vor das jeweils zu betätigende Schubfach angehoben bzw. abgesenkt werden kann. In jeder dieser Etagen kann der Manipulator horizontal bewegt werden, so dass das jeweilige Schubfach mittels des Manipulators entweder aus der Ofenkammer herausgezogen, das Schubfach also geöffnet werden kann, oder wieder in die Ofenkammer eingeschoben werden kann.

Zur modularen Erweiterung der Ofenkapazitäten können gemäß einer ersten Alternative zwei Öfen einander gegenübergestellt werden. Dabei wird der Manipulator aus Gründen der Kostenersparnis so ausgestaltet und angeordnet, dass er die Schubfächer beider Öfen öffnen und schließen kann. Gemäß einer zweiten Alternative können mehrere Öfen nebeneinander stehen, wobei dem Manipulator ein Freiheitsgrad quer zur Arbeitsrichtung der Schubfächer gewährt wird, sodass auch in diesem Fall ein Manipulator zur effizienten Bedienung mehrerer Öfen bzw. Ofenmodule eingesetzt werden kann.

Eine weitere Maßnahme zur Effizienzsteigerung besteht darin, die Kapazität des Ofens möglichst vollständig auszunutzen, indem mindestens zwei Werkstücke neben- oder hintereinander auf dem Träger liegend simultan erwärmt werden.

Vorteilhaft kann vorgesehen sein, dass wenigstens ein Heißlufteinlass, vorteilhaft jedoch mehrere oder alle Heißlufteinlässe einen freien Durchlass für die Heißluft mit veränderlichem, einstellbarem Querschnitt aufweist. So kann bei der Inbetriebnahme des Temperierofens eine gleichmäßige Luftverteilung in der Ofenkammer eingestellt werden, und es können in Anpassung an die jeweils verwendeten Werkstücke und daran, wo diese auf dem Träger des Schubfachs angeordnet werden, die Heißlufteinlässe so eingestellt werden, dass jeder Teilbereich eines Werkstücks, z. B. einer Platine, mit demselben Volumenstrom angeströmt wird. Des Weiteren können dadurch mögliche lokale Wärmesenken, hervorgerufen z.B. durch den Blendenspalt, kompensiert werden.

Eine konstruktiv einfache, im praktischen Betrieb robuste sowie einfach einstellbare Ausgestaltung eines solchen einstellbaren Heißlufteinlasses kann dadurch verwirklicht werden, dass der Heißlufteinlass zwei mit Durchbrechungen versehene und gegeneinander verstellbare Scheiben aufweist. Die Scheiben liegen im Wesentlichen einander an, so dass keine Heißluft unkontrolliert radial zwischen den Scheiben austritt. Wenigsten eine der beiden Scheiben ist als verstellbare Scheibe relativ zu der anderen Scheibe beweglich, so dass zugunsten einer konstruktiv einfachen Ausgestaltung die andere Scheibe fest montiert sein kann. Die Durchbrechungen der beiden Scheiben überlappen sich je nach Verstellung der einen Scheibe - oder ggf. der beiden beweglichen Scheiben - unterschiedlich weit und schaffen somit unterschiedlich große Querschnittsflächen des freien Durchlasses des Heißlufteinlasses.

Durch die vorschlagsgemäße Ausgestaltung des Temperierofens werden folgende Anforderungen erfüllt:
- Durch einen kompakten Bauraum kann der als Kammerofen ausgestaltete Temperierofen auch bei vergleichsweise beengten Platzverhältnissen in eine bestehende Fertigungslinie integriert werden. Ein leistungsstarker und effizienter Niederdruck-Querstromventilator ermöglicht die Anordnung des Temperierofens auf einer vergleichsweise geringen Grundfläche.
- Durch hohe Anströmgeschwindigkeiten der Heißluft gegen das Werkstück, die beispielsweise im Bereich von 11m/s liegen können, wird eine Wärmeübertragung von 20 kW/ m² oder eine noch höhere Wärmeübertragung ermöglicht. 3 mm starke Aluminium-Platinen können ersten Versuchen zufolge in weniger als drei Minuten auf eine Temperatur von 430°C gebracht werden.
- Durch den Einsatz eines Konvektionsofens, also die Wärmeübertragung mittels Heißluft, kann der Temperierofen universell für unterschiedlichste Werkstücke und Werkstoffe eingesetzt werden.
- Die Eignung des Temperierofens für die unterschiedlichen Werkstoffe und im Rahmen unterschiedlicher Bearbeitungsprozesse wird auch durch die Einstellbarkeit der Betriebstemperatur im Bereich von Raumtemperatur bis 600°C unterstützt, wobei in diesem Temperaturbereich stufenlos jede Temperatur präzise gehalten werden kann.
- Die erwähnte präzise Temperaturführung des Ofens bedeutet, dass im leeren Ofen eine gewählte Temperatur im Bereich von +/- 3°C gehalten werden kann und eine homogene Platinenerwärmung mit einer maximalen Abweichung von +/- 5°C über die gesamte Fläche der Platine erzielt werden kann. Die hohe Umwälzgeschwindigkeit der Heißluft und eine gute thermische Isolierung der Ofenkammer sowie die Vermeidung von starken Temperaturverlusten bei der Beschickung und Entladung des Schubfachs unterstützen dies.
- Durch die hohe Umwälzgeschwindigkeit und eine hohe installierte Heizleistung von beispielsweise 132 kW wird mittels des Temperierofens die Erwärmung von 300 kg Aluminium-Platinen innerhalb einer Stunde von Raumtemperatur auf 430°C ermöglicht.
- Aerodynamisch geformte und angeordnete Luftleitbleche ermöglichen eine möglichst verlustarme Führung der Gebläseluft und unterstützen somit eine hohe Effizienz des Heizgebläses.
- Durch das gezielte Anblasen der Werkstücke mit Heißluft wird an der Oberfläche der Werkstücke Prallluft erzeugt und eine laminare Anströmung der Werkstücke möglichst vermieden. Hierdurch wird eine intensive Wärmeübertragung gewährleistet.
- Aufgrund der intensiven Konvektionsbeheizung ist eine Heißluftführung mit einer Lufttemperatur möglich, die nahe der Werkstück-Solltemperatur liegt. Daher besteht keine Gefahr der Überhitzung. Durch einen geschlossenen Regelkreis mit ofenseitigen Temperatursensoren und durch eine integrierte Selbstoptimierung der Regelungssoftware innerhalb der Ofensteuerung kann das Temperaturmanagement der Heißluft optimiert werden.
- Eine robuste und wartungsarme Ausgestaltung des Temperierofens wird durch eine möglichst einfache Mechanik unterstützt. Beispielsweise ist für das Schubfach innerhalb des Warmbereichs des Temperierofens lediglich eine einfache Führung erforderlich. Und der für die Temperaturführung des Temperierofens kritische Verschluss der Beschickungsöffnung erfolgt durch ein robustes Bauteil in Form der Verschlussblende, die mitsamt dem gesamten Schubfach verfahrbar ist. Die Anordnung der Werkstücke auf dem Schubfach ermöglicht es, vergleichsweise empfindliche Elemente wie der Manipulator, der zum Öffnen und Schließen des Schubfachs erforderlich ist, oder ein Manipulator, der für die Beschickung des Trägers oder für die Entnahme der Werkstücke vom Träger vorgesehen ist, ausschließlich außerhalb des Warmbereiches des Temperierofens zu betreiben.
- Üblicherweise wird Luft als Heißgas verwendet, also als Wärmeträgermedium. Je nach Anwendungsgebiet und den für die Werkstücke verwendeten Werkstoffen kann jedoch auch ein Schutzgas oder ein Gasgemisch als Heißgas verwendet werden.

Ein Ausführungsbeispiel eines vorschlagsgemäßen Temperierofens wird anhand der rein schematischen Darstellungen nachfolgend näher erläutert. Dabei zeigt
- Fig. 1: eine perspektivische Ansicht schräg von oben auf einen Temperierofen mit geöffnetem Schubfach,
- Fig. 2: einen Vertikalschnitt durch den Temperierofen von Fig. 1, entlang der Linie II-II, die

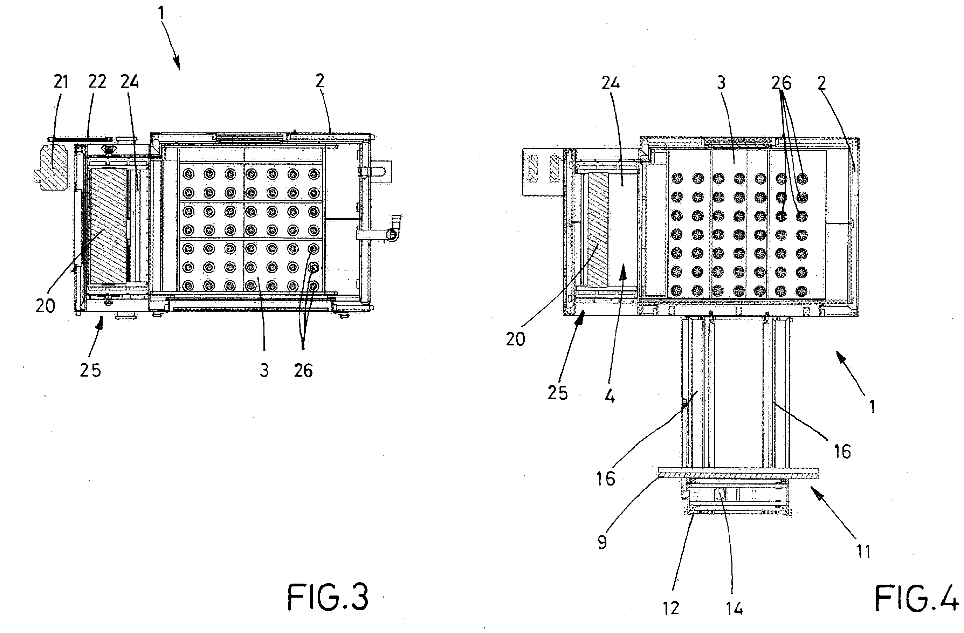

- Fig. 3 u. 4: Horizontalschnitte durch den Temperierofen, entlang den Linien III-III und IV-IV in Fig. 2 und die
- Fig. 5 u. 6: einen Heißlufteinlass aus zwei unterschiedlichen Blickrichtungen.

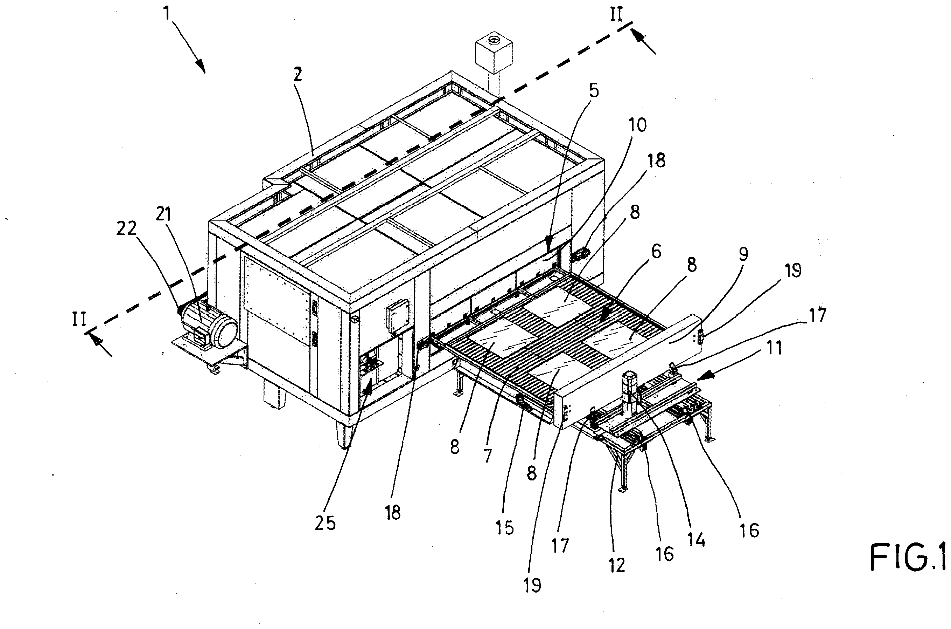

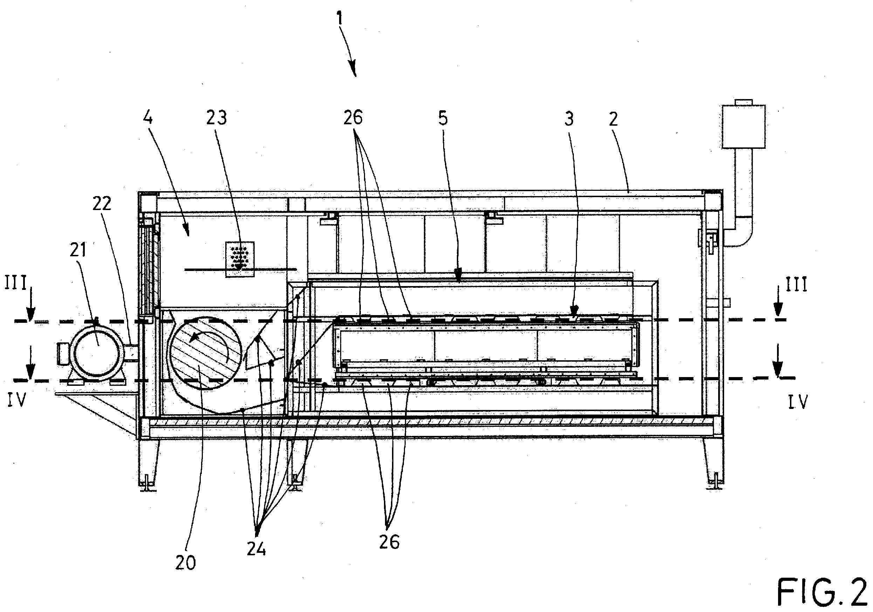

In den Zeichnungen ist mit 1 insgesamt ein Temperierofen bezeichnet. Ein Ofengehäuse 2 umgibt einerseits eine aus Fig. 2 ersichtliche Ofenkammer 3 sowie eine Gebläsekammer 4. Die Ofenkammer 3 weist eine Beschickungsöffnung 5 auf, ein Schubfach 6 weist einen Träger 7 auf, der als Rost ausgestaltet ist und auf dem vier als flache metallische Platinen ausgestaltete Werkstücke 8 aufliegen. Das Schubfach 6 weist eine vordere, erste Verschlussblende 9 auf, die sich bei geöffnetem Schubfach 6, wie in Fig. 1 dargestellt, im Abstand vorder Beschickungsöffnung 5 befindet. Mittels einer zweiten, hinteren Verschlussblende 10 ist auch in dieser Offenstellung des Schubfachs 6 die Ofenkammer 3 nach außen hin abgeschlossen.

Ein Manipulator 11 ist auf einem fest stehenden Gestell 12 längsbeweglich gelagert, wobei ein Antriebsmotor 14 über eine Energiekette 15 mit elektrischer Energie versorgt wird und den Manipulator 11 entlang von Führungsschienen 16 hin und her verfahren kann, um das Schubfach 6 wahlweise öffnen zu können oder zu schließen. Greifer 17 erfassen dabei die Verschlussblende 9, um die Bewegungen des Manipulators 11 auf das Schubfach 6 zu übertragen.

Falls abweichend von dem dargestellten Ausführungsbeispiel ein Temperierofen mit mehreren Etagen geschaffen werden soll, beispielsweise mit mehreren Ofenkammern 3 übereinander sowie mit mehreren übereinander angeordneten Gebläsekammern 4, kann das fest stehende Gestell 12 durch einen Scherenhubtisch ersetzt werden oder der Manipulator 11 anderweitig höhenbeweglich gelagert werden, so dass nur ein Manipulator 11 erforderlich ist, um diese mehreren Etagen zu bedienen. Die Prozessführung stellt dabei sicher, dass die einzelnen Ofenkammern 3 zeitversetzt beschickt bzw. geleert werden, so dass Wartezeiten vermieden werden und die Leistungsfähigkeit des mehretagigen Temperierofens maximiert wird.

Im geschlossenen Zustand wird das Schubfach 6 mit Hilfe von Verriegelungselementen 18 beaufschlagt. Diese sind als pneumatische Stößel ausgestaltet, deren Stößelkopf eine Schrägfläche aufweist und mit Verschlussplatten 19 zusammenwirkt, die an den beiden seitlichen Enden der Verschlussblende 9 vorgesehen sind. Zur Erzielung höherer Schließkräfte kann jedoch alternativ vorgesehen sein, dass jeweils ein Stößel auf einen Kniehebelmechanismus einwirkt. Bei geöffnetem Schubfach 6, wie in Fig. 1 dargestellt, befinden sich die pneumatischen Stößel in ihrer zurückgezogenen Stellung, so dass die Verriegelungselemente 18 ihre Freigabestellung einnehmen. Bei geschlossenem Schubfach 6, wenn die Verschlussblende 9 die Beschickungsöffnung 5 abschließt, können die pneumatischen Stößel der Verriegelungselemente 18 ausgefahren werden, so dass die Schrägflächen ihrer Stößelköpfe zunehmend stärker gegen die Verschlussplatten 19 drücken.

Zur Beheizung der Ofenkammer 3 bzw. der Werkstücke 8 dient ein als Niederdruck-Querstromventilator ausgestaltetes Heizgebläse 20, welches in Fig. 2 rein schematisch mit seinem vollen Querschnitt dargestellt ist. Das Heizgebläse 20 wird angetrieben durch einen Gebläsemotor 21, der außerhalb des Gehäuses 2 neben der Gebläsekammer 4 angeordnet ist und das Heizgebläse 20 über einen Riemen 22 antreibt. Die Drehrichtung des Heizgebläses 20 erfolgt dabei, entsprechend der Ansicht von Fig. 2, entgegen dem Uhrzeigersinn. Elektrische Heizregister 23 sind rein beispielhaft in der Gebläsekammer 4 dargestellt, alternativ kann auch eine Beheizung der Gebläseluft mit Gas vorgesehen sein.

Vom Heizgebläse 20 wird die aufgeheizte Heißluft zwischen Luftleitblechen 24 in die Ofenkammer 3 gefördert, wobei die Luftleitbleche 24 den Heißluftstrom in zwei Teilströme aufteilen, von denen einer in den oberen Bereich und der andere Teilstrom in den unteren Bereich der Ofenkammer 3 geführt wird. Auf der in Fig. 2 rechten Seite der Ofenkammer 3 verlässt die Heißluft die Ofenkammer 3 und strömt nun innerhalb des Gehäuses 2 oberhalb der Ofenkammer 3 in die Gebläsekammer 4 zurück, wo sie erneut auf die gewünschte Temperatur aufgeheizt wird. Über einen Lufteinlass 25 kann Frischluft in den Temperierofen 1 einströmen und, nachdem sie vorgewärmt wurde, in die Gebläsekammer 4 gelangen, um auf diese Weise Heißluftverluste auszugleichen, die beim Öffnen des Schubfachs 6 entstehen.

In der Ofenkammer 3 ist eine Vielzahl von Heißlufteinlässen 26 vorgesehen, die auch als Düsen bezeichnet werden können, wobei obere Heißlufteinlässe 26 für den oberen Heißluft-Teilstrom vorgesehen sind und untere Heißlufteinlässe 26 für den unteren Heißluft-Teilstrom vorgesehen sind. Die oberen und unteren Heißlufteinlässe 26 befinden sich dementsprechend oberhalb und unterhalb des Trägers 7 bzw. der Werkstücke 8, so dass die Werkstücke 8 von beiden Seiten mit Heißluft beaufschlagt werden. Durch die Ausgestaltung bzw. Einstellung der Heißlufteinlässe 26 und/oder durch die Luftführung der Teilluftströme mittels der Leitbleche 24 ist gewährleistet, dass die Werkstücke 8 von oben stärker angeströmt werden als von unten, so dass sie durch die Heißluft auf dem Träger 7 lagesicher gehalten werden, ohne dass es zusätzlicher Halterungen am Schubfach 6 für die Werkstücke 8 bedarf.

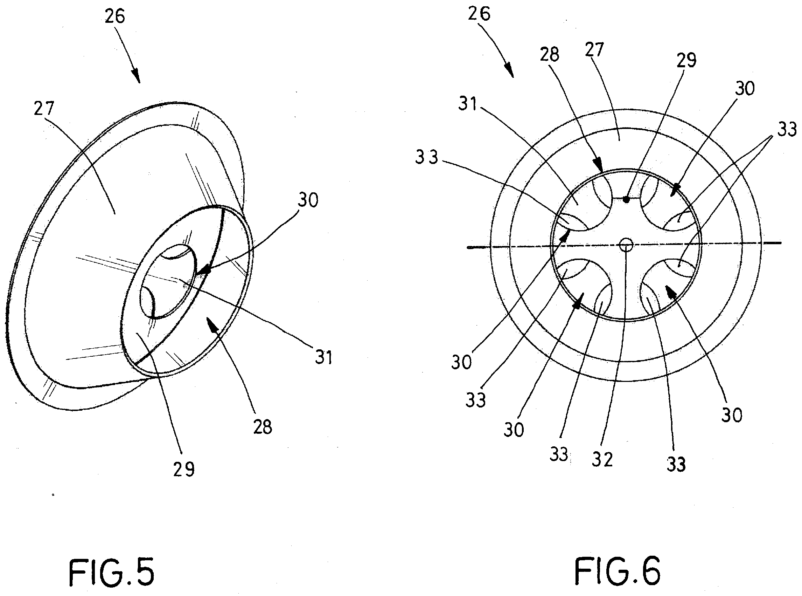

Fig. 5 zeigt perspektivisch einen Heißlufteinlass 26. Dieser weist einen konisch zulaufenden, kegelstumpfförmigen Düsenmantel 27 auf, der sich zu einer Düsenöffnung 28 hin verjüngt, wobei diese Düsenöffnung 28 die Austrittsöffnung darstellt, durch welche die Heißluft den Heißlufteinlass 26 verlässt und in die Ofenkammer 3 eintritt. Die Düsenöffnung 28 befindet sich an der so genannten, zum Träger 7 und dem Werkstück 8 hin weisenden Vorderseite des Heißlufteinlasses 26.

An der Rückseite weist der Heißlufteinlass 26 eine feste Scheibe 29 auf, die mit vier Durchtrittsöffnungen 30 versehen ist. Die Durchtrittsöffnungen 30 werden teilweise verdeckt durch eine verstellbare Scheibe 31, die nämlich um eine Mittelachse 32 gedreht werden kann. Auf diese Weise lassen sich freie Durchlässe 33 verändern und somit das Strömungsverhalten der Heißlufteinlässe 26 beeinflussen.

## Patentansprüche

1. Temperierofen (1) zum Aufheizen von flachen, als Platinen bezeichneten, metallischen Werkstücken (8),
mit einer eine Beschickungsöffnung (5) aufweisenden Ofenkammer (3) zur Aufnahme der Werkstücke (8), einem Heißluft in die Ofenkammer (3) fördernden Heizgebläse (20),
einer Verschlussblende (9), welche wahlweise in eine die die Beschickungsöffnung (5) öffnende Offenstellung oder eine die Beschickungsöffnung (5) verschließende Schließstellung beweglich ist,
einem Träger (7), auf dem die Werkstücke (8) in der Ofenkammer (3) aufliegen,
wobei eine als Schubfach (6) bezeichnete Baugruppe in der Ofenkammer (3) angeordnet ist, die den Träger (7) aufweist,
und wobei die Verschlussblende (9) an dem Schubfach (6) befestigt und gemeinsam mit diesem beweglich ist,
**dadurch gekennzeichnet,**
• **dass** das Schubfach (6) mittels eines vor der Ofenkammer (3) angeordneten, horizontal beweglichen Manipulators (11) wahlweise aus der Ofenkammer (3) heraus oder wieder in die Ofenkammer (3) hinein verfahrbar ist, und der Manipulator (11) in der Art höhenbeweglich ist, dass er vor das jeweils zu betätigende Schubfach (6) anhebbar bzw. absenkbar ist,
und in jeder dieser Etagen in der Art horizontal beweglich ist, dass das jeweilige Schubfach (6) mittels des Manipulators (11) entweder aus der Ofenkammer (3) herausziehbar oder wieder in die Ofenkammer (3) einschiebbar ist,
• **dass** sowohl oberhalb als auch unterhalb von dem Träger (7) Heißlufteinlässe (26) in die Ofenkammer (3) münden,
wobei die Heißlufteinlässe (26) derart ausgestaltet und angeordnet sind, dass die daraus austretende Heißluft in der Art auf den Träger (7) gerichtet ist, dass durch das gezielte Anblasen der Werkstücke an der Oberfläche der Werkstücke Prallluft erzeugt wird,
• und **dass** das Heizgebläse (20) die Heißluft mit einer hohen Anströmgeschwindigkeit von wenigstens 7 m/s und mit einer hohen Umwälzgeschwindigkeit von wenigstens 30.000 m³/h fördernd ausgestaltet ist.

2. Temperierofen nach Anspruch 1,
**dadurch gekennzeichnet,**
**dass** an dem Schubfach (6) zusätzlich zu der genannten, ersten Verschlussblende (9) eine zweite, sogenannte hintere Verschlussblende (10) befestigt und gemeinsam mit dem Schubfach (6) beweglich ist,
wobei die hintere Verschlussblende (10) derart angeordnet ist, dass bei geöffnetem Schubfach (6), wenn sich die erste Verschlussblende (9) im Abstand vor der Beschickungsöffnung (5) befindet, die Beschickungsöffnung (5) mittels der hinteren Verschlussblende (10) verschlossen ist.

3. Temperierofen nach Anspruch 1 oder 2,
**dadurch gekennzeichnet,**
**dass** das Heizgebläse (20) die Heißluft mit einer Anströmgeschwindigkeit von wenigstens 10 m/s fördernd ausgestaltet ist.

4. Temperierofen nach einem der vorhergehenden Ansprüche,
**dadurch gekennzeichnet,**
**dass** das Heizgebläse (20) die Heißluft mit einer Umwälzgeschwindigkeit von wenigstens 50.000 m³/h fördernd ausgestaltet ist.

5. Temperierofen nach einem der vorhergehenden Ansprüche,
**dadurch gekennzeichnet,**
**dass** das Heizgebläse (20) als Querstromventilator ausgestaltet ist.

6. Temperierofen nach einem der vorhergehenden Ansprüche,
**dadurch gekennzeichnet,**
**dass** das Heizgebläse (20) als Niederdruckventilator mit höchstens 1.200 Pa ausgestaltet ist.

7. Temperierofen nach Anspruch 6,
**dadurch gekennzeichnet,**
**dass** das Heizgebläse (20) als Niederdruckventilator mit höchstens 900 Pa ausgestaltet ist.

8. Temperierofen nach einem der vorhergehenden Ansprüche,
**dadurch gekennzeichnet,**
**dass** durch die oberhalb von dem Träger (7) angeordneten Heißlufteinlässe (26) eine stärkere Anströmung der Werkstücke (8) erfolgt als durch die unterhalb von dem Träger (7) angeordneten Heißlufteinlässe (26).

9. Temperierofen nach einem der vorhergehenden Ansprüche,
**gekennzeichnet durch**
ein bewegliches Verriegelungselement (18), welches außerhalb der Ofenkammer (3) und nahe der Beschickungsöffnung (5) derart angeordnet ist, dass es wahlweise in seiner Riegelstellung die erste Verschlussblende (9) in ihrer Schließstellung hält oder in seiner Freigabestellung die erste Verschlussblende (9) freigibt.

10. Temperierofen nach Anspruch 9,
**dadurch gekennzeichnet,**
**dass** das Verriegelungselement (18) als pneumatischer Riegel ausgestaltet ist, der mittels einer Schrägfläche mit der Verschlussblende (9) zusammenwirkend angeordnet ist.

11. Temperierofen nach Anspruch 9,
**dadurch gekennzeichnet,**
**dass** das Verriegelungselement (18) als pneumatischer Riegel ausgestaltet ist, der über einen Kniehebelmechanismus mit der Verschlussblende (9) zusammenwirkend angeordnet ist.

12. Temperierofen nach einem der vorhergehenden Ansprüche,
**dadurch gekennzeichnet,**
**dass** ein Heißlufteinlass (26) einen freien Durchlass (33) für die Heizluft mit veränderlichem, einstellbarem Querschnitt aufweist.

13. Temperierofen nach Anspruch 12,
**dadurch gekennzeichnet,**
**dass** der Heißlufteinlass (26) zwei mit Durchbrechungen versehene Scheiben (29, 31) aufweist, die im Wesentlichen einander anliegend angeordnet sind,
wobei wenigsten die eine der beiden Scheiben (29, 31) als verstellbare Scheibe (31) relativ zu der anderen Scheibe (29) beweglich ist,
derart, dass die Durchbrechungen der beiden Scheiben (29, 31) sich verstellabhängig unterschiedlich überlappen und unterschiedlich große Querschnittsflächen des freien Durchlasses (33) schaffen.

14. Temperierofen nach einem der vorhergehenden Ansprüche,
**dadurch gekennzeichnet,**
**dass** mehrere Ofenkammern (3) mit jeweils eigenem Schubfach (6) übereinander angeordnet sind.

15. Temperierofen nach Anspruch 14,
**dadurch gekennzeichnet,**
**dass** jeder Ofenkammer (3) ein eigenes Heizgebläse (20) zugeordnet ist.

16. Temperierofen nach Anspruch 14 oder 15,
**dadurch gekennzeichnet,**
**dass** den mehreren Schubfächern (6) ein gemeinsamer Manipulator (11) zugeordnet ist,
welcher höhenbeweglich ist, derart, dass er vor das jeweils zu betätigende Schubfach (6) anhebbar oder absenkbar ist, und welcher in den unterschiedlichen Höhen jeweils horizontal beweglich ist, derart, dass das jeweilige Schubfach (6) mittels des Manipulators (11) wahlweise aus der Ofenkammer (3) heraus oder wieder in die Ofenkammer (3) hinein verfahrbar ist.

17. Temperierofen nach einem der vorhergehenden Ansprüche,
**dadurch gekennzeichnet,**
**dass** die Heißlufteinlässe (26) derart ausgestaltet und angeordnet sind, dass die daraus austretende Heißluft im rechten Winkel auf die Oberfläche des Trägers (7) gerichtet ist.

## Claims

1. Tempering oven (1) for heating up flat metal workpieces (8) that are referred to as "blanks", which tempering oven (1) has an oven chamber (3) that incorporates a charging hole (5) and receives the workpieces (8) a heat fan (20) to blow hot air into the oven chamber (3),
a shutter (9) that can be moved, as required, into an open position to open the charging hole (5) or into a closed position to shut the charging hole (5), a carrier (7) on which the workpieces (8) are placed in the oven chamber (3),
where a subassembly referred to as a drawer (6) is arranged in the oven chamber (3) that incorporates the carrier (7)
and where the shutter (9) is fastened to the drawer (6) and can be moved together with the drawer (6), **characterised in**
• **that** the drawer (6) can, as required, be pulled out of the oven chamber (3) or pushed back into the oven chamber (3) by means of a manipulator (11) that can be moved horizontally and is arranged in front of the oven chamber (3)
and the manipulator (11) can be moved vertically in such a way that it can be raised or lowered in front of whichever drawer (6) is to be actuated and can be moved horizontally at each of these levels in such a way that the drawer (6) to be actuated can be either pulled out of the oven chamber (3) or pushed back into the oven chamber (3) by means of the manipulator (11)
• **that** hot air inlets (26) lead into the oven chamber (3) both above and below the carrier (7),
where the hot air inlets (26) are constructed and arranged in such a way that the hot air emerging from them is directed at the carrier (7) in such a way that by blowing accurately onto the workpieces impact air is generated on the surface of the workpieces
• and **that** the heat fan (20) is designed to blow hot air at a high onflow velocity of at least 7 m/s and at a high circulation velocity of at least 30,000 m³/h.

2. Tempering oven in accordance with claim 1, **characterised in that** in addition to the aforementioned first shutter (9) a second, so-called rear shutter (10) is fastened to the drawer (6) and can be moved together with the drawer (6),
where the rear shutter (10) is arranged in such a way that, when the drawer (6) has been opened and the first shutter (9) is positioned at a distance from the charging hole (5), the charging hole (5) is closed by means of the rear shutter (10).

3. Tempering oven in accordance with claim 1 or 2, **characterised in that** the heat fan (20) is designed to blow hot air at an onflow velocity of at least 10 m/s.

4. Tempering oven in accordance with any one of the preceding claims,
**characterised in**
**that** the heat fan (20) is designed to blow hot air at a circulation velocity of at least 50,000 m³/h.

5. Tempering oven in accordance with any one of the preceding claims,
**characterised in**
**that** the heat fan (20) is designed as a cross-current ventilator.

6. Tempering oven in accordance with any one of the preceding claims,
**characterised in**
**that** the heat fan (20) is designed as a low-pressure ventilator delivering not more than 1,200 Pa.

7. Tempering oven in accordance with claim 6, **characterised in that** the heat fan (20) is designed as a low-pressure ventilator delivering not more than 900 Pa.

8. Tempering oven in accordance with any one of the preceding claims,
**characterised in**
**that** a stronger airflow onto the workpieces (8) is generated by the hot air inlets (26) arranged above the carrier (7) than by the hot air inlets (26) arranged below the carrier (7).

9. Tempering oven in accordance with any one of the preceding claims,
**characterised by**
a movable interlocking element (18) that is arranged outside the oven chamber (3) and near the charging hole (5) in such a way that, as required, the interlocking element (18) in its locking position holds the first shutter (9) in its closed position or in its release position releases the first shutter (9).

10. Tempering oven in accordance with claim 9, **characterised in that** the interlocking element (18) is designed as a pneumatic lock that is arranged to co-act with the shutter (9) through an oblique surface.

11. Tempering oven in accordance with claim 9, **characterised in that** the interlocking element (18) is designed as a pneumatic lock that is arranged to co-act with the shutter (9) through a toggle lever mechanism.

12. Tempering oven in accordance with any one of the preceding claims,
**characterised in**
**that** a hot air inlet (26) incorporates a free throughlet (33) for the heating air with variable, adjustable cross-section.

13. Tempering oven in accordance with claim 12, **characterised in that** the hot air inlet (26) incorporates two disks (29, 31) that are provided with through-holes and are essentially arranged so as to rest against each other, where at least one of the two disks (29, 31) acting as an adjustable disk (31) can be moved relative to the other disk (29) in such a way that the through-holes in the two disks (29, 31) overlap differently depending on adjustment and produce differently sized crosssectional surfaces in the free throughlet (33).

14. Tempering oven in accordance with any one of the preceding claims,
**characterised in**
**that** a plurality of oven chambers (3) each having its own drawer (6) is arranged one above the other.

15. Tempering oven in accordance with claim 14, **characterised in that** each oven chamber (3) is assigned its own heat fan (20).

16. Tempering oven in accordance with claim 14 or 15, **characterised in that** the plurality of drawers (6) is assigned a common manipulator (11) that can be moved vertically
in such a way that the common manipulator (11) can be raised or lowered in front of whichever drawer (6) is to be actuated and that can be moved horizontally at each of the different heights in such a way that the drawer (6) to be actuated can, as required, be pulled out of the oven chamber (3) or pushed back into the oven chamber (3) by means of the manipulator (11).

17. Tempering oven in accordance with any one of the preceding claims,
**characterised in**
**that** the hot air inlets (26) are designed and arranged in such a way that the hot air emerging from them is directed onto the surface of the carrier (7) at right angles.

## Revendications

1. Four à recuit (1) pour échauffer des pièces métalliques (8) plates appelées « platines », comprenant une chambre (3) de four qui présente un orifice de chargement (5) par lequel recevoir les pièces (8),
comprenant une soufflerie chauffante (20) refoulant l'air chaud en direction de la chambre (3) du four,
un bandeau d'obturation (9) déplaçable au choix vers une position ouverte ouvrant l'orifice de chargement (5) ou vers une position de fermeture obturant l'orifice de chargement (5),
un support (7) sur lequel appliquent les pièces (8) dans la chambre (3) du four,
sachant qu'un module appelé « tiroir » (6) est disposé dans la chambre (3) du four, module qui présente le support (7),
et sachant que le bandeau d'obturation (9) est fixé contre le tiroir (6) et qu'il est déplaçable solidairement avec ce dernier,
**caractérisé en ce**
• **que** le tiroir (6) est déplaçable - au moyen d'un manipulateur (11) mobile horizontalement et disposé devant la chambre (3) du four - de sorte à le faire au choix sortir de la chambre (3) du four ou à le faire rentrer dans la chambre (3) du four,
et **que** le manipulateur (11) est déplaçable verticalement de façon à pouvoir être monté ou abaissé devant le tiroir (6) respectif devant être actionné,
et **qu'**à chacun de ces étages il est déplaçable horizontalement que le tiroir (6) respectif puisse, au moyen du manipulateur (11), être soit extrait de la chambre (3) du four soit réintroduit dans la chambre (3) du four,
• **qu'**aussi bien au-dessus qu'en dessous du support (7), des orifices d'admission (26) d'air chaud débouchent dans la chambre (3) du four, sachant que les orifices d'admission (26) d'air chaud sont configurés et disposés de façon à ce que l'air chaud qui en sort est dirigé vers le support (7) de sorte que la projection d'air ciblée sur les pièces génère de l'air d'impact à la surface des pièces,
• et **que** la soufflerie chauffante (20) est configurée pour refouler l'air chaud à une haute vitesse d'afflux élevée d'au moins 7 m/s et avec une vitesse de circulation élevée d'au minimum 30 000 m³/h.

2. Four à recuit selon la revendication 1, **caractérisé en ce**
**que** contre le tiroir (6) est fixé, en plus du bandeau d'obturation (9) premier cité, un second bandeau dit « bandeau arrière » (10) et qu'il est déplaçable solidairement avec le tiroir (6),
sachant que le bandeau d'obturation (10) arrière est disposé de telle manière que lorsque le tiroir (6) est ouvert, lorsque le premier bandeau d'obturation (9) se trouve à distance de l'orifice de chargement (5), l'orifice de chargement (5) est obturé au moyen du bandeau d'obturation (10) arrière.

3. Four à recuit selon la revendication 1 ou 2, **caractérisé en ce que** la soufflerie chauffante (20) est configurée pour refouler l'air chaud à une vitesse d'afflux d'au moins 10 m/s.

4. Four à recuit selon l'une des revendications précédentes, **caractérisé en ce**
**que** la soufflerie chauffante (20) est configurée pour refouler l'air chaud en lui conférant une vitesse de circulation d'au moins 50 000 m³/h.

5. Four à recuit selon l'une des revendications précédentes, **caractérisé en ce**
**que** la soufflerie chauffante (20) est configurée comme ventilateur à flux transversal.

6. Four à recuit selon l'une des revendications précédentes, **caractérisé en ce**
**que** la soufflerie chauffante (20) est configurée comme ventilateur basse pression développant au maximum 1 200 Pa.

7. Four à recuit selon la revendication 6, **caractérisé en ce**
**que** la soufflerie chauffante (20) est configurée comme ventilateur basse pression développant au maximum 900 Pa.

8. Four à recuit selon l'une des revendications précédentes, **caractérisé en ce**
**qu'**à travers les orifices d'admission (26) d'air chaud disposés au-dessus du support (7), les pièces (8) reçoivent un afflux d'air plus intense que l'afflux d'air traversant les orifices d'admission (26) d'air chaud situés en dessous du support (7).

9. Four à recuit selon l'une des revendications précédentes, **caractérisé par** un élément de verrouillage (18) mobile disposé en dehors de la chambre (3) du four et près de l'orifice de chargement (5), de sorte à retenir lorsqu'en position verrouillée le premier bandeau d'obturation (9) sur sa position fermée, ou à libérer, lorsque sur sa position de libération, le premier bandeau d'obturation (9).

10. Four à recuit selon la revendication 9, **caractérisé en ce**
**que** l'élément de verrouillage (18) est configuré comme verrou pneumatique disposé de manière à interagir via une surface oblique avec le bandeau d'obturation (9).

11. Four à recuit selon la revendication 9, **caractérisé en ce**
**que** l'élément de verrouillage (18) est configuré comme verrou pneumatique disposé de manière à interagir via un mécanisme à genouillère (9) avec le bandeau d'obturation.

12. Four à recuit selon l'une des revendications précédentes, **caractérisé en ce**
**qu'**un orifice d'admission (26) d'air chaud présente un guichet de passage (33) de l'air chaud à section de passage variable réglable.

13. Four à recuit selon la revendication 12, **caractérisé en ce**
**que** l'orifice d'admission (26) d'air chaud présente deux disques (29, 31) ajourés disposés pour l'essentiel en applique l'un contre l'autre, sachant qu'au moins l'un des deux disques (29, 31) est un disque (31) ajustable relativement à l'autre disque (29),
de sorte que les parties ajourées des deux disques (29, 31) se chevauchent différemment en fonction de l'ajustement et confèrent ainsi au guichet de passage libre (33) des sections de passage différemment grandes.

14. Four à recuit selon l'une des revendications précédentes, **caractérisé en ce**
**que** plusieurs chambres (3) du four ayant leur propre tiroir (6) sont disposées superposées.

15. Four à recuit selon la revendication 14, **caractérisé en ce**
**qu'**à chaque chambre (3) du four est affectée sa propre soufflerie chauffante (20).

16. Four à recuit selon la revendication 14 ou 15, **caractérisé en ce**
**qu'**à la pluralité de tiroirs (6) est affecté un manipulateur (11) conjoint déplaçable en hauteur,
de sorte à pouvoir être monté ou abaissé devant le tiroir (6) respectif devant être actionné,
et lequel manipulateur est déplaçable horizontalement respectivement aux différentes hauteurs,
de sorte à pouvoir déplacer le tiroir (6) respectif au moyen du manipulateur (11) au choix pour le sortir de la chambre (3) du four ou pour le réintroduire dans la chambre (3) du four.

17. Four à recuit selon l'une des revendications précédentes, **caractérisé en ce**
**que** les orifices d'admission (26) d'air chaud sont configurés et disposés de sorte que l'air chaud qui en sort est dirigé perpendiculairement à la surface du support (7).
